(19) Europäisches Patentamt
European Patent Office
Office européen des brevets

(11) **EP 4 566 865 A1**

(12) **EUROPEAN PATENT APPLICATION**
published in accordance with Art. 153(4) EPC

(43) Date of publication:
**11.06.2025 Bulletin 2025/24**

(21) Application number: **23849869.5**

(22) Date of filing: **13.07.2023**

(51) International Patent Classification (IPC):
**B60L 15/20** (2006.01)   **B60L 9/18** (2006.01)

(52) Cooperative Patent Classification (CPC):
**B60L 9/18; B60L 15/20**

(86) International application number:
**PCT/JP2023/025921**

(87) International publication number:
**WO 2024/029310 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.08.2022 JP 2022125331**

(71) Applicant: **Hitachi, Ltd.**
**Tokyo 100-8280 (JP)**

(72) Inventors:
• **KUNIHIRO, Naoki**
**Tokyo 100-8280 (JP)**
• **HATSUSE, Wataru**
**Tokyo 100-8280 (JP)**
• **OGAWA, Kazutoshi**
**Tokyo 100-8280 (JP)**

(74) Representative: **Mewburn Ellis LLP**
**Aurora Building**
**Counterslip**
**Bristol BS1 6BX (GB)**

(54) **VEHICLE CONTROL DEVICE, VEHICLE CONTROL METHOD, AND VEHICLE CONTROL SYSTEM**

(57)    This vehicle control device comprises: a first limiting unit which limits a first driving force for a front shaft (one shaft) that is an axle connected to a driving part for generating a driving force for driving a vehicle, in order to cause vehicle wheels 21 disposed on the front shaft (one shaft) to be viscously mounted; and a torque limiting unit 32 which is a second limiting unit for limiting, at a location where the first driving force is limited, a second driving force for rear shafts (2-4 shafts) which are axles located on the rear side in the traveling direction of the vehicle from the front shaft (one shaft), in order to cause vehicle wheels 21 disposed on the rear shafts (2-4 shafts) to be viscously mounted. Accordingly, it is possible to provide a vehicle control device, a vehicle control method, and a vehicle control system with which idling slip of the vehicle wheels can be suppressed according to various road states.

FIG. 1

EP 4 566 865 A1

**Description**

Technical Field

The present invention relates to a vehicle control device, a vehicle control method, and a vehicle control system. The present invention particularly relates to a vehicle control device, a vehicle control method, and a vehicle control system that can be suitably used when recovering an adhesion force of vehicle wheels in the case of idling or slip of the vehicle wheels.

Background Art

In a vehicle such as a railway vehicle, a vehicle wheel which is a drive wheel is rotated by a torque of a rotating electrical machine, and the vehicle is accelerated by a tangential force generated on the vehicle wheel as a reaction force received by a vehicle wheel tread surface from a rail.

This tangential force fluctuates depending on a tangential force coefficient $\mu$ representing an adhesion state between the vehicle wheel and the rail, and in a case where the torque of the vehicle wheel becomes excessively larger than the tangential force, only a force for rotating the vehicle wheel increases while a force for accelerating the vehicle remains small, resulting in idling or slip (hereinafter, abbreviated as "idling slip") of the vehicle wheel. In particular, when it rains or it snows, an adhesion coefficient greatly decreases, so that idling slip is likely to occur.

In a case where the idling slip is expanded, there are a problem that acceleration/deceleration performance of the vehicle is deteriorated, and a problem that vehicle body vibration occurs due to a large fluctuation in tangential force to deteriorate ride comfort. Therefore, idling re-adhesion control is widely used in which the idling slip occurring between the vehicle wheel and the rail is quickly detected, and the torque of the rotating electrical machine is reduced to cause the vehicle wheel to re-adhere on the rail.

PTL 1 discloses preparing a plurality of power distribution patterns as a pattern table. The power distribution pattern is determined so as to reduce an output of a power device corresponding to a front vehicle wheel in which idling or slip is likely to occur in the power device and compensate for the reduction with another power device. A selection means selects one power distribution pattern on the basis of information on idling or slip of the traveling vehicle wheel obtained from an idling slip detector. A drive device decides a control output to the corresponding power device on the basis of an operation command and the power distribution pattern selected by the selection means.

PTL 2 discloses that when idling slip occurs, re-adhesion control is performed on a first shaft that has undergone the idling slip, and idling slip induction suppression control is performed on each of the other second to fourth shafts. In the idling slip induction suppression control, the torque of a target shaft is changed in synchronization with the torque reduction by the re-adhesion control. A torque change amount $\Delta\tau eb$ is determined on the basis of an acceleration $\alpha$ at the time of idling slip of an idling slip shaft and a predetermined coefficient k. The coefficient k is determined on the basis of which, idling or slip, has occurred, an arrangement positional relationship between the target shaft and the idling slip shaft in the vehicle, and the like. For example, in the case of idling during power transmission, the change amount is determined to reduce the torque when the target shaft is a shaft behind the idling slip shaft and to raise the torque when the target shaft is a shaft ahead of the idling slip shaft.

Citation List

Patent Literature

    PTL 1: JP 2006-304464 A
    PTL 2: JP 2009-290954 A

Summary of Invention

Technical Problem

In the idling re-adhesion control, in a case where the torque is steeply operated, it is possible to obtain an advantage that idling slip can be quickly converged, and on the other hand, the tangential force fluctuates steeply to cause vibration of the vehicle body, which leads to deterioration of ride comfort. On the other hand, in a case where the torque is gently operated, the amount of expansion of idling slip increases, and a time required to reduce the torque to establish re-adhesion becomes long, which leads to a decrease in acceleration.

As described above, in the torque operation in the re-adhesion control after the idling slip detection, it is difficult to achieve both the reduction of vehicle body vibration and the improvement of acceleration, and there is a trade-off relationship. Therefore, it is desirable to suppress the occurrence of idling slip itself. At this time, it is desirable to suppress idling slip in accordance with a change in a road state that complicatedly changes depending on a travel section.

An object of the present invention is to provide a vehicle control device, a vehicle control method, and a vehicle control system capable of suppressing idling slip of vehicle wheels in accordance with various road states.

Solution to Problem

In order to solve the above problem, the present invention is a vehicle control device including: a first limiting unit which limits a first driving force for a first axle that is an axle connected to a driving part which generates a driving force for driving a vehicle, in order to cause first vehicle wheels disposed on the first axle to be viscously mounted; and a second limiting unit which limits, at a location where the first driving force is limited, a second driving force for a second axle that is an axle located on a rear side from the first axle in a traveling direction of the vehicle, in order to cause second vehicle wheels disposed on the second axle to be viscously mounted.

In addition, the present invention is a vehicle control method including: limiting a first driving force for a first axle that is an axle connected to a driving part which generates a driving force for driving a vehicle, in order to cause first vehicle wheels disposed on the first axle to be viscously mounted; and limiting, at a location where the first driving force is limited, a second driving force for a second axle that is an axle located on a rear side from the first axle in a traveling direction of the vehicle, in order to cause second vehicle wheels disposed on the second axle to be viscously mounted.

Further, the present invention is a vehicle control system including: a driving part which generates a driving force for driving a vehicle; vehicle wheels which cause the vehicle to travel by the driving force of the driving part; and a control device which performs control to cause the vehicle wheels to be viscously mounted, wherein the control device includes a first limiting unit which limits a first driving force for a first axle that is an axle connected to the driving part, in order to cause first vehicle wheels disposed on the first axle to be viscously mounted, and a second limiting unit which limits, at a location where the first driving force is limited, a second driving force for a second axle that is an axle located on a rear side from the first axle in a traveling direction of the vehicle, in order to cause second vehicle wheels disposed on the second axle to be viscously mounted.

Advantageous Effects of Invention

According to the present invention, it is possible to provide the vehicle control device, the vehicle control method, and the vehicle control system capable of suppressing idling slip of vehicle wheels in accordance with various road states.

Brief Description of Drawings

[FIG. 1] FIGS. 1(a) to 1(b) are block diagrams illustrating an overall configuration of a vehicle control system according to the present embodiment.
[FIG. 2] FIG. 2 is a diagram illustrating an example of a schematic configuration of a drive device.
[FIG. 3] FIG. 3 is a diagram illustrating functional blocks of a motion equation of a vehicle and one drive wheel shaft.
[FIG. 4] FIG. 4 is a diagram illustrating a relationship between a slip speed and a tangential force coefficient between a vehicle wheel and a rail.
[FIG. 5] FIG. 5 is a diagram illustrating idling slip during power transmission and regeneration of the vehicle.
[FIG. 6] FIGS. 6(a) to 6(m) are schematic diagrams of an operation of suppressing occurrence of idling slip according to the present embodiment.
[FIG. 7] FIG. 7 is a diagram illustrating an example of a traveling position calculation unit.
[FIG. 8] FIG. 8 is a diagram illustrating a modification of the traveling position calculation unit.
[FIG. 9] FIG. 9 is a diagram illustrating a modification of the traveling position calculation unit.
[FIG. 10] FIG. 10 is a diagram illustrating an example of a torque command value held by a torque information calculation unit.
[FIG. 11] FIG. 11 is a diagram illustrating an example of a history of generated torque information.
[FIG. 12] FIG. 12 is a diagram illustrating an example of a configuration of a torque limiting unit.
[FIG. 13] FIG. 13 is a diagram illustrating a modification of the torque limiting unit.
[FIG. 14] FIG. 14 is a diagram illustrating an adjustment gain of a setting value.
[FIG. 15] FIG. 15 is a diagram illustrating an outline of operation waveforms in a case where the present embodiment is applied.

[FIG. 16] FIG. 16 is a diagram illustrating an outline of operation waveforms in a case where the present embodiment is applied.

[FIG. 17] FIG. 17 is a diagram illustrating an outline of operation waveforms in a case where a modification of the present embodiment is applied.

[FIG. 18] FIG. 18 is a diagram illustrating an outline of operation waveforms in a case where the modification of the present embodiment is applied.

[FIG. 19] FIG. 19 is a diagram illustrating an example of a case where the present embodiment is applied to a train formation of the vehicle.

[FIG. 20] FIG. 20 is a diagram illustrating a first modification in a case where the present embodiment is applied to the train formation of the vehicle.

[FIG. 21] FIG. 21 is a diagram illustrating a second modification in a case where the present embodiment is applied to the train formation of the vehicle.

[FIG. 22] FIG. 22 is a diagram illustrating a modification of a control device to which the configuration of FIG. 21 is applied.

[FIG. 23] FIG. 23 is a diagram illustrating an example of a history of torque information in a case where the configuration of FIG. 21 is applied.

[FIG. 24] FIG. 24 is a diagram illustrating an example of a case where the present embodiment is applied between a plurality of train formations traveling on a railway.

[FIG. 25] FIG. 25 is a diagram illustrating an outline of operation waveforms in a case where the present embodiment is applied.

[FIG. 26] FIG. 26 is a diagram illustrating an outline of operation waveforms in a case where the present embodiment is applied.

[FIG. 27] FIG. 27 is a diagram illustrating an example of a case where a synchronous machine is used as a rotating electrical machine.

[FIG. 28] FIG. 28 is a diagram illustrating an example of a case where an induction machine is used as the rotating electrical machine.

[FIG. 29] FIGS. 29(a) to 29(b) are diagrams for comparing a history of torque information generated in a first embodiment with a history of torque information generated in a second embodiment.

[FIG. 30] FIGS. 30(a) to 30(b) are diagrams for comparing the history of torque information generated in the first embodiment with the history of torque information generated in the third embodiment.

Description of Embodiments

[First Embodiment]

Hereinafter, embodiments of the present invention will be described in detail with reference to the accompanying drawings.

Herein, first, a first embodiment of a vehicle control system will be described. In the first embodiment, idling slip of vehicle wheels of a front shaft located in front of a vehicle in a traveling direction is detected. Then, when vehicle wheels of a rear shaft located behind the front shaft reach a place where the vehicle wheels of the front shaft idle and slip, the torque applied to the rear shaft is limited, and the vehicle wheels of the rear shaft are suppressed from idling slip.

<Description of overall configuration of vehicle control system 100>

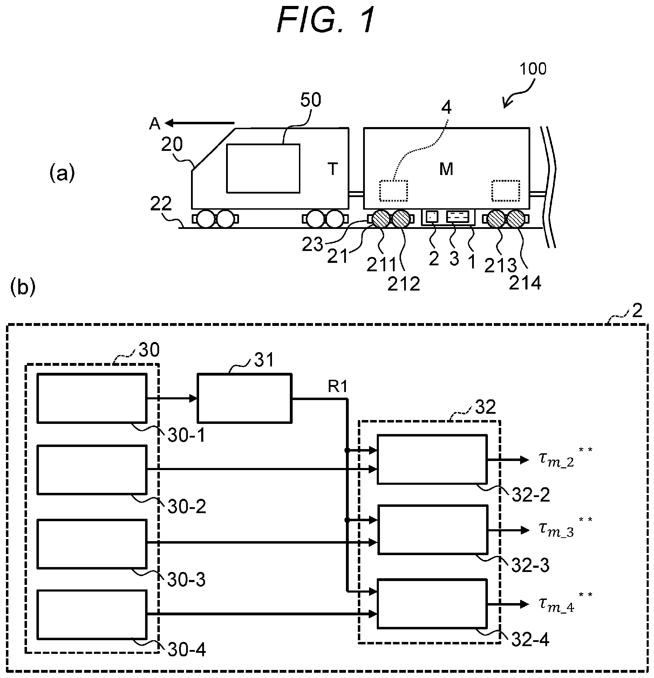

FIGS. 1(a) to 1(b) are block diagrams illustrating an overall configuration of a vehicle control system 100 according to the present embodiment.

FIG. 1(a) illustrates a case where a plurality of vehicles 20 is connected and travels as a railway vehicle. These vehicles 20 travel on the rails 22 leftward in the drawing.

In addition, a carriage 23 is mounted on the vehicle 20, and vehicle wheels 21 are provided on the carriage 23. The rotating electrical machine 4 is connected to each shaft of the vehicle wheels 21 via a gear. The rotating electrical machine 4 is an example of a driving part that generates a driving force for driving the vehicle 20, and is, for example, an alternating-current motor (alternating-current motor) that operates by alternating current.

Further, a drive device 1 is mounted on the vehicle 20. The drive device 1 applies three-phase AC for driving the rotating electrical machine 4 to the rotating electrical machine 4. The drive device 1 includes a control device 2 that controls a voltage output device 3 and a voltage output device 3 that generates a three-phase AC.

Furthermore, the vehicle 20 is provided with a host control device 50 of the control device 2. The host control device 50 is, for example, a cab monitor device or a transmission device.

In FIG. 1(a), the vehicle 20 on which the rotating electrical machine 4 is mounted and which outputs power is an M (motor car) car, and the vehicle 20 towed by the M car is a T (trailer car) car. Here, the leading vehicle 20 is the T car, and the second vehicle 20 is the M car. Note that here, the wheel shafts of the vehicle wheels 21 in the M car will be defined as a first shaft 211, a second shaft 212, a third shaft 213, and a fourth shaft 214 from the front side of the vehicle 20 in a traveling direction A. In addition, hereinafter, the first shaft may be referred to as a front shaft as a shaft on the front side, and the second to fourth shafts may be referred to as a rear shaft as a shaft on the rear side of the front shaft.

In the drive device 1, the voltage output device 3 applies a three-phase AC voltage to the rotating electrical machine 4 on the basis of a switching command from the control device 2. At this time, in the drive device 1, the three-phase AC voltage is generated by a drive circuit and a main circuit included in the voltage output device 3.

In the rotating electrical machine 4, a drive current flows by application of the three-phase AC voltage from the voltage output device 3, and a rotational torque is generated.

The vehicle wheels 21 rotate by the rotational torque of the rotating electrical machine 4, and transmit a force to the carriage 23 so as to accelerate the vehicle 20 by a tangential force generated on the vehicle wheels 21 as a reaction force received by the vehicle wheel tread surface from a rail 22. In this case, it can also be said that the vehicle wheels 21 causes the vehicle 20 to travel by using the driving force of the rotating electrical machine 4.

The control device 2 is an example of a vehicle control device, and in the present embodiment, performs control to cause the vehicle wheels 21 to adhere on the rail 22. The control device 2 is implemented with a control program for driving and controlling the rotating electrical machine 4 connected as a load. Here, as illustrated in FIG. 1(b), the control device 2 includes a traveling position calculation unit 30, a torque information calculation unit 31, and a torque limiting unit 32 as means for operating with a maximum force while preventing idling slip of the rear shaft.

The traveling position calculation unit 30 calculates the traveling position of each shaft on the basis of information on the speed of the vehicle 20 (vehicle speed) or the circumferential speed of the vehicle wheels 21 (vehicle wheel circumferential speed). Here, the traveling position calculation unit 30 is provided for each of the first shaft to the fourth shaft. In FIG. 1(b), the traveling position calculation units 30 are illustrated as a traveling position calculation unit (first shaft) 30-1, a traveling position calculation unit (second shaft) 30-2, a traveling position calculation unit (third shaft) 30-3, and a traveling position calculation unit (fourth shaft) 30-4.

The torque information calculation unit 31 outputs a history R1 of torque information at the time of idling slip of the first shaft located on the front side of the vehicle 20 in the traveling direction A.

The torque limiting unit 32 receives the history R1 of torque information of the first shaft located on the front side of the vehicle 20 in the traveling direction A and a traveling position calculation result of the second to fourth shafts calculated by the traveling position calculation unit 30, and outputs torque limit values $\tau_{m\_2}^{**}$ to $\tau_{m\_4}^{**}$ of the second to fourth shafts located on the rear side of the vehicle 20 in the traveling direction A. Here, the torque limiting unit 32 is provided for each of the second to fourth shafts. In FIG. 1(b), the torque limiting units are illustrated as a torque limiting unit (second shaft) 32-2, a torque limiting unit (third shaft) 32-3, and a torque limiting unit (fourth shaft) 32-4.

<Description of schematic configuration of drive device 1>

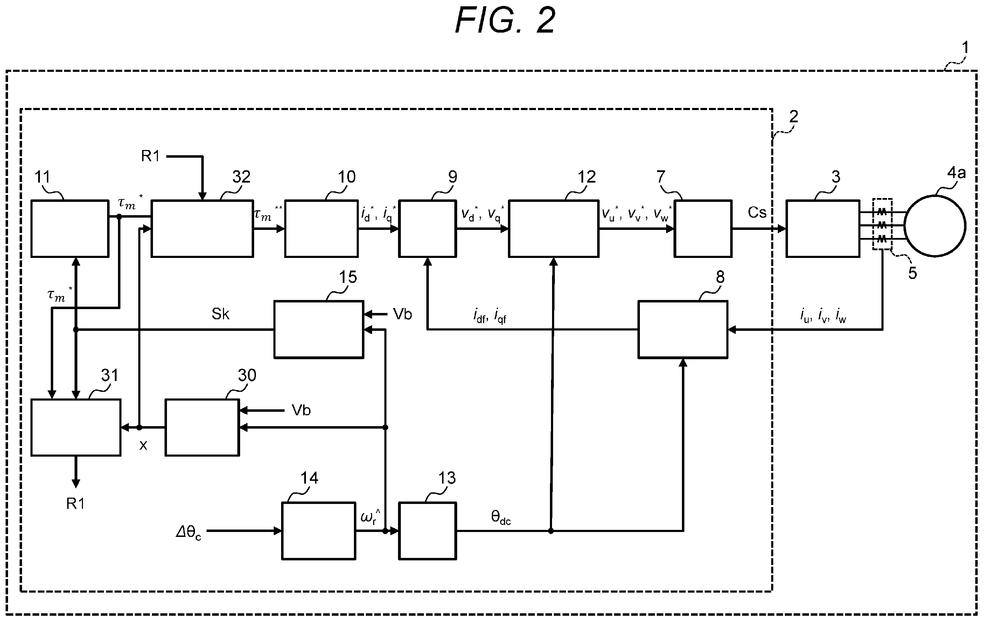

FIG. 2 is a diagram illustrating an example of a schematic configuration of the drive device 1.

As described with reference to FIG. 1(a), the drive device 1 includes the control device 2 and the voltage output device 3. In addition, although not included in the drive device 1, a synchronous machine (synchronous motor) 4a as the rotating electrical machine 4 and a current detector 5 are illustrated herein.

Hereinafter, a functional aspect of each component included in the control device 2 will be described. However, FIG. 2 illustrates a configuration for controlling one of the first to fourth shafts which are drive wheel shafts. Therefore, for example, in a case where the fourth shaft is driven in a 1C1M configuration, three other shafts have similar configurations although not illustrated.

FIG. 2 illustrates only the minimum necessary functional blocks in the first embodiment. For example, a power converter including a driving transistor such as an insulated gate bipolar transistor (IGBT) and a power device such as a diode, a control configuration for the power converter, and the like are illustrated as the voltage output devices 3 in a block diagram, and detailed illustration is omitted.

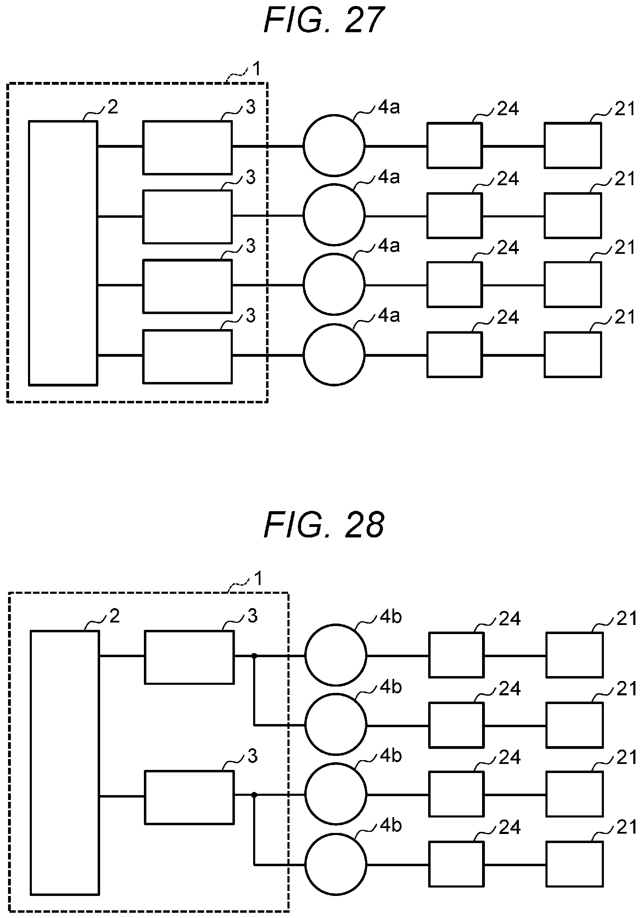

In addition, although the synchronous machine (synchronous motor) 4a is used as the rotating electrical machine 4 in FIG. 2, an induction machine (induction motor) 4b other than the synchronous machine may be used as the rotating electrical machine 4 as illustrated in FIG. 28 to be described later.

The current detector 5 includes a Hall current transformer (CT) or the like, and detects waveforms of three-phase currents $i_u$, $i_v$, and $i_w$ of a U phase, a V phase, and a W phase flowing through the synchronous machine 4a. However, it is not always necessary to detect the currents of all the three phases by the current detector 5, and any two of the three phases may be detected, and the remaining one phase may be obtained by calculation assuming that the three-phase currents are in an equilibrium state.

The control device 2 includes a torque command calculation unit 11, the torque limiting unit 32, the torque information calculation unit 31, the traveling position calculation unit 30, a current command calculation unit 10, a current

**EP 4 566 865 A1**

detection coordinate conversion unit 8, a current control unit 9, a voltage command coordinate conversion unit 12, a PWM control unit 7, a phase synchronization control unit 14, an idling slip detection determination unit 15, and a phase calculation unit 13.

The torque command calculation unit 11 outputs a torque command value $\tau_m^*$ according to an operation command from the host control device 50.

The torque limiting unit 32 performs calculation only in a case where a shaft to be controlled is the rear shaft (second to fourth shafts), and does not perform calculation in a case where the shaft to be controlled is the front shaft (first shaft). A (limited) torque command value $\tau_m^{**}$ is output by limiting the torque command value $\tau_m^*$ on the basis of a traveling position x of the own shaft and the history R1 of the torque information calculated on the front shaft (first shaft).

The torque information calculation unit 31 performs calculation only in a case where the shaft to be controlled is the front shaft (first shaft), and does not perform calculation in a case where the shaft to be controlled is the rear shaft (second to fourth shafts). The torque command value $\tau_m^*$ is held at a timing when an idling slip detection flag is enabled with respect to the traveling position x of the own shaft or a timing when a torque is restored after completion of re-adhesion.

As described above, the traveling position calculation unit 30 calculates the traveling position x of each shaft on the basis of the information of the vehicle speed or the vehicle wheel circumferential speed.

The current command calculation unit 10 outputs dq-axis current command values $i_d^*$ and $i_q^*$ for obtaining a predetermined torque to the torque command value $\tau_m^{**}$.

The current detection coordinate conversion unit 8 converts the three-phase currents $i_u$, $i_v$, and $i_w$ of the synchronous machine 4a detected by the current detector 5 into dq coordinates of a rotating coordinate system by using a d-axis estimated phase $\theta_{dc}$ recognized by the control device 2, and outputs the dq coordinates as dq-axis current detection values ($i_{df}$ and $i_{qf}$) to the current control unit 9.

The current control unit 9 generates and outputs dq-axis voltage command values $v_d''$ and $v_q^*$ by proportional integral (PI) control or the like such that a current deviation between the dq-axis current detection value output from the current detection coordinate conversion unit 8 and the dq-axis current command value output from the current command calculation unit 10 becomes 0.

The voltage command coordinate conversion unit 12 outputs three-phase AC voltage command values $v_u^*$, $v_v^*$, and $v_w^*$ by using the dq-axis voltage command values $v_d^*$ and $v_q^*$ output from the current control unit 9 and the d-axis estimated phase $\theta_{dc}$.

The PWM control unit 7 outputs a switching command Cs of a pulse width modulation (PWM) voltage to the voltage output device 3 on the basis of the three-phase AC voltage command values $v_u^*$, $v_v^*$, and $v_w^*$ output from the voltage command coordinate conversion unit 12.

On the basis of phase deviation information $\Delta\theta_c$, the phase synchronization control unit 14 outputs an estimated angular velocity value $\omega_r^\wedge$ so as to make the phase deviation information $\Delta\theta_c$ 0.

The phase deviation information $\Delta\theta_c$ indicates a difference between the d-axis estimated phase $\theta_{dc}$ and a rotor phase $\theta_d$ of the synchronous machine 4a. Here, the phase deviation information $\Delta\theta_c$ may be either an estimated value $\Delta\theta_{est}$ of the phase deviation by sensorless control or the phase deviation information $\Delta\theta_c$ obtained by using the information of a phase detection value $\theta_r$ by a resolver or the like (although not illustrated) to calculate the difference from the d-axis estimated phase $\theta_{dc}$.

In addition, as a method of obtaining an estimated phase deviation value $\Delta\theta_{est}$, for example, a method of estimating the estimated phase deviation value $\Delta\theta_{est}$ on the basis of a radio-frequency current detection value when a radio-frequency voltage is superimposed in a low speed range or a method of estimating the estimated phase deviation value $\Delta\theta_{est}$ by using the induced voltage of the synchronous machine 4a in a high speed range is used.

The idling slip detection determination unit 15 performs detection determination of idling slip on the basis of a differential value (detection by acceleration) of the estimated angular velocity value $\omega_r^\wedge$ output from the phase synchronization control unit 14, a difference value (detection by differential speed) between the estimated angular velocity value $\omega_r^\wedge$ and a vehicle speed $v_b$, and the like, and outputs an idling slip detection signal Sk to the torque command calculation unit 11. When receiving the idling slip detection signal Sk, the torque command calculation unit 11 quickly reduces the torque command value $\tau_m^*$ to converge the idling slip having occurred between the vehicle wheels 21, which are drive wheels, and the rail 22 and cause the vehicle wheels 21 to re-adhere on the rail 22. In order not to lower the acceleration/deceleration of the vehicle 20, the torque is quickly restored after completion of re-adhesion.

The phase calculation unit 13 performs integration processing on the estimated angular velocity value $\omega_r^\wedge$ output from the phase synchronization control unit 14, and outputs the d-axis estimated phase $\theta_{dc}$.

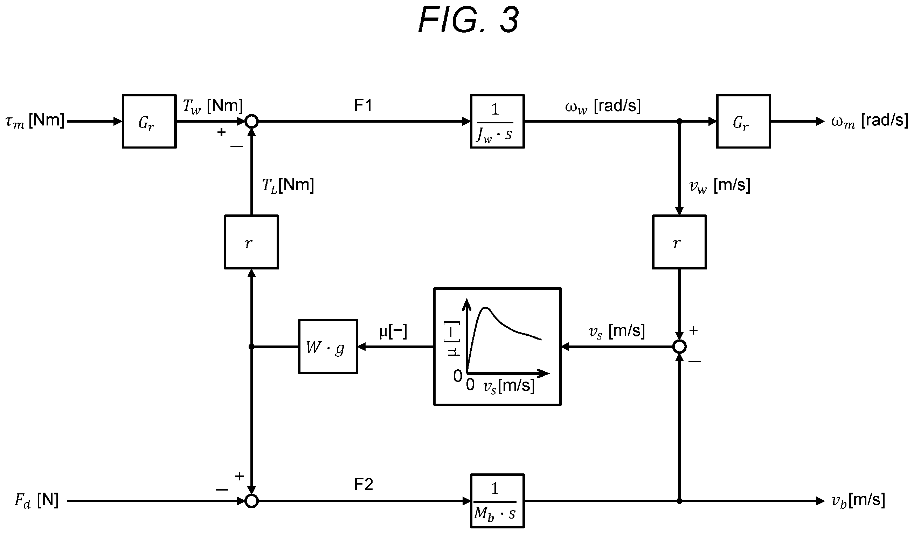

FIG. 3 is a diagram illustrating functional blocks of a motion equation of the vehicle 20 and one drive wheel shaft.

Here, as a motion equation based on a motor torque $\tau_m$ of the rotating electrical machine 4, the motion equation of the vehicle 20 and the rotating electrical machine 4 is illustrated in the block diagram. Then, here, a case is illustrated in which adhesion by a tangential force coefficient $\mu$ between the vehicle wheels 21, which are drive wheels, and the rail 22 is considered. A force F1 for rotating the vehicle wheels 21 is determined by a difference between a vehicle wheel torque $T_w$ and a tangential force torque $T_L$, and is output as an angular velocity $\omega_m$ of the vehicle wheels 21. In addition, a force F2 for

6

accelerating the vehicle 20 is determined by a difference between the tangential force and a travel resistance $F_d$, and is output as the vehicle speed $v_b$. Then, the force F1 for rotating the vehicle wheels 21 and the force F2 for accelerating the vehicle 20 change depending on the tangential force coefficient $\mu$.

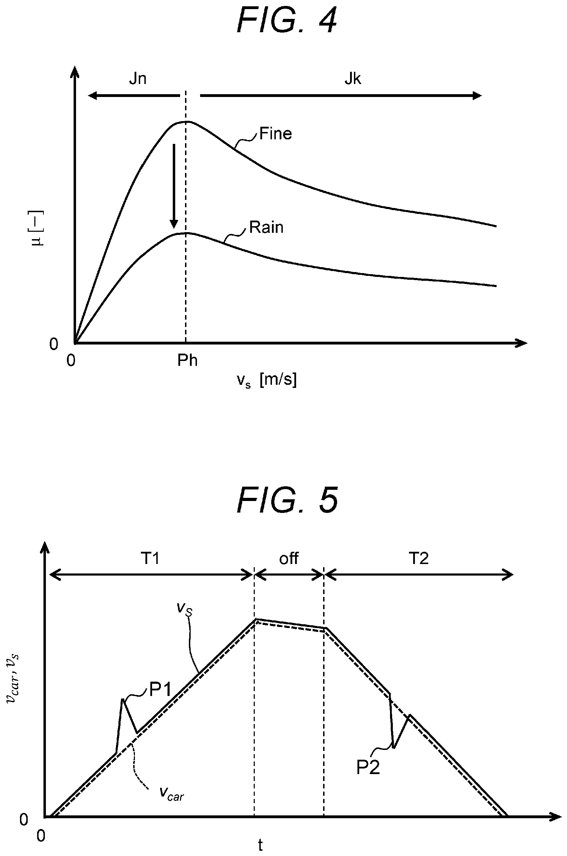

FIG. 4 is a diagram illustrating a relationship between a slip speed $v_s$ and the tangential force coefficient $\mu$ between the vehicle wheels 21 and the rail 22.

In FIG. 4, a horizontal axis represents the slip speed $v_s$, and a vertical axis represents the tangential force coefficient $\mu$.

The tangential force coefficient $\mu$ changes depending on the slip speed $v_s$ which is a difference between the vehicle wheel circumferential speed and a vehicle body speed. That is, the tangential force coefficient $\mu$ increases to an inflection point Ph as the slip speed $v_s$ increases from 0, but the slip speed $v_s$ decreases after passing the inflection point Ph. In addition, in a region below the inflection point Ph, the vehicle wheels 21 and the rail 22 are in an adhesion state Jn, but after the inflection point Ph, the vehicle wheels 21 and the rail 22 are in an idling state Jk.

In addition, as illustrated, in a rainy weather Rain, the tangential force coefficient $\mu$ decreases with respect to a fine weather Fine, and idling slip is likely to occur. It is known that the tangential force coefficient $\mu$ changes not only by rain but also by oil components, fallen leaves, and dust on a rail road surface. In addition, it is known that the tangential force coefficient $\mu$ changes as a flange portion of the vehicle wheels 21 travels while being pressed against the side surface of the rail 22 in a curved section or the like, and also changes depending on a gradient and a vehicle speed.

FIG. 5 is a diagram illustrating idling slip during power transmission and regeneration of the vehicle 20.

In FIG. 5, a horizontal axis represents time t, and a vertical axis represents speeds $v_{car}$ and $v_s$ of the vehicle wheels 21 or the vehicle 20. Then, a solid line indicates the rotation speed of the vehicle wheels 21, and a dotted line indicates the speed of the vehicle 20.

As illustrated in FIG. 4, in a case where the tangential force coefficient $\mu$ decreases due to the influence of rain or the like, only the force for rotating the vehicle wheels 21 increases while the force for accelerating the vehicle 20 illustrated in FIG. 3 is small, and the slip speed $v_s$ increases. Further, in a case where the tangential force coefficient $\mu$ exceeds the inflection point Ph illustrated in FIG. 4, idling occurs in the vehicle wheels 21. In FIG. 5, this is illustrated as a peak indicated by "idling P1". As illustrated in FIG. 4, the tangential force coefficient $\mu$ has a negative inclination with respect to the slip speed $v_s$ after exceeding the inflection point Ph, so that idling continues to increase in a direction of expansion once the idling occurs. Note that the above is a description of a power transmission time T1, but slip occurs at a regeneration time T2. In FIG. 5, this is illustrated as a peak indicated by "slip P2".

In a case where idling slip expands, there arises a problem that acceleration/deceleration performance of the vehicle 20 is deteriorated. In addition, the tangential force greatly fluctuates, so that the force for accelerating the vehicle 20 illustrated in FIG. 3 greatly fluctuates, and as a result, vehicle body vibration occurs, which causes a problem of deteriorating ride comfort. For this reason, it is necessary to quickly detect idling slip occurring between the vehicle wheels 21 and the rail 22 and reduce the torque of the rotating electrical machine 4 to cause the vehicle wheels 21 to re-adhere on the rail 22.

<Description of configuration for preventing occurrence of idling slip in rear shaft>

Hereinafter, a configuration for preventing occurrence of idling slip on the rear shaft by using the traveling position and torque information of the front shaft, which are main points of the present embodiment, will be described.

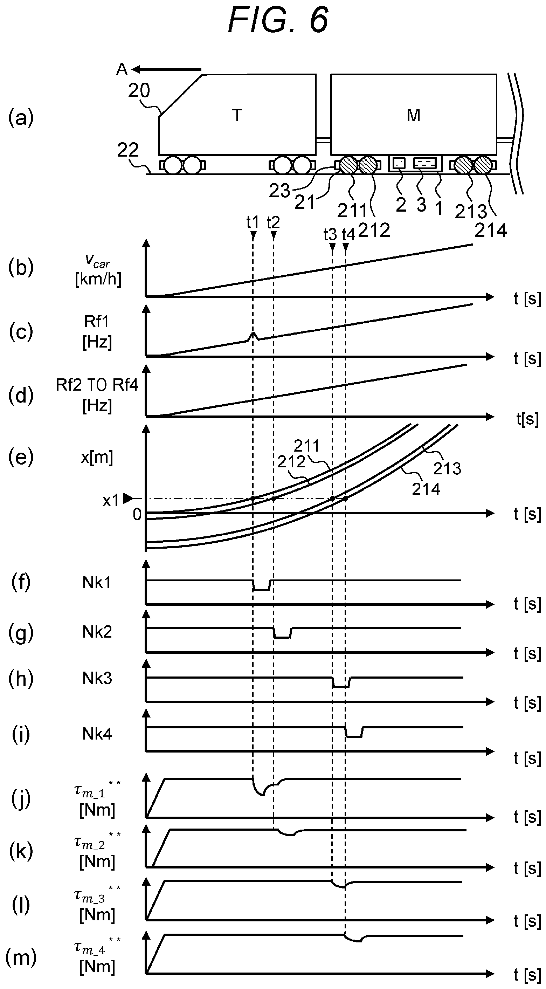

FIGS. 6(a) to 6(m) are schematic diagrams of an operation of suppressing occurrence of idling slip according to the present embodiment.

Here, a situation where the adhesion coefficient decreases in some of a travel section while the vehicle 20 is travelling will be described as an example.

When the vehicle 20 accelerates from a stop and passes through a section in which the adhesion coefficient of the rail road surface decreases, idling is first detected on the front shaft (first shaft) with respect to the traveling direction of the vehicle 20.

The occurrence of idling on the front shaft (first shaft) means that the torque of the front shaft (first shaft) is excessively larger than a maximum adhesion force in this travel section as described with reference to FIGS. 3 to 5. That is, even when the rear shaft (second to fourth shafts) passes through the same travel section, in a case where the operation is performed at the same torque as the front shaft (first shaft), there is a high possibility that idling slip similarly occurs in the vehicle wheels 21.

In this regard, the inventors have considered functions separately for each shaft with respect to the traveling direction of the vehicle 20.

In the front shaft (first shaft) in the traveling direction of the vehicle 20, the front shaft is treated as a so-called sensor for detecting the state of the rail road surface, so as to detect a travel section in which a tangential force is reduced and a motor torque (maximum adhesion force) that can be output in the travel section.

Then, on the rear shaft (second to fourth shafts) in the traveling direction of the vehicle 20, a torque is controlled to an appropriate magnitude in an appropriate travel section on the basis of the detection information of the front shaft (first shaft). Accordingly, while the front shaft (first shaft) exhibits behavior in which idling slip occurs and the re-adhesion control is repeated, in the rear shaft (second to fourth shafts), the occurrence of idling slip itself can be prevented and driving can be performed near the maximum adhesion force. As a result, it is possible to obtain effects of reducing vehicle body vibration and improving acceleration.

As described in FIG. 4, the tangential force coefficient $\mu$ changes complicatedly due to various factors. The factors include a factor having a long time shaft such as season and weather and a factor having a short time shaft, such as a curve, a gradient, a rail joint, and an oil feeder, which changes from moment to moment during traveling. In particular, it is difficult to promptly respond to the latter factor having a short time shaft by a method based on the number of times of detection in the past or a method of modeling from theory or past experimental data in advance as in the prior art. For this reason, the inventors have considered grasping the latest road state by using the front shaft (first shaft).

A specific description will be given below with reference to FIG. 6. Note that in FIGS. 6(b) to 6(m), a horizontal axis represents time **t.**

Here, a case is illustrated in which when the vehicle speed $v_{car}$ increases as illustrated in FIG. 6(b) in the vehicle 20 having the configuration illustrated in FIG. 6(a), idling is detected on the front shaft (first shaft 211) as illustrated in FIG. 6(c). In FIG. 6(c), a first-shaft rotation frequency Rf1 increases at time t1, whereby the idling slip detection determination unit 15 (see FIG. 2) detects that idling has occurred in the vehicle wheels 21 of the front shaft (first shaft 211).

In addition, as illustrated in FIG. 6(e), the times when the rear shafts (second shaft 212 to fourth shaft 214) reach a traveling position x1 where the front shaft (first shaft 211) has detected idling are indicated as time t2, time t3, and time t4, respectively.

In this case, as illustrated in FIGS. 6(f) to 6(i), it is considered that adhesion coefficients Nk1 to Nk4 of the front shaft (first shaft 211) and the rear shaft (second shaft 212 to fourth shaft 214) change with the lapse of time as shown in the drawing. That is, the adhesion coefficient Nk1 of the front shaft (first shaft 211) decreases at time t1, and the adhesion coefficients Nk2 to Nk4 of the rear shafts (second shaft 212 to fourth shaft 214) decrease at times t2, t3, and t4.

Then, as illustrated in FIG. 6(j), the torque command calculation unit 11 (see FIG. 2) limits the torque command value $\tau_n{}^*$ of the front shaft (first shaft 211) and causes the vehicle wheels 21 to re-adhere on the rail 22. Then, the torque command calculation unit 11 quickly restores the torque after completion of the re-adhesion.

In addition, the torque limiting unit 32 (see FIG. 2) limits the torque command value $\tau_m{}^*$ on the basis of the history of the torque information calculated on the front shaft (first shaft 211) and outputs the (limited) torque command value $\tau_m{}^{**}$. Actually, as illustrated in FIGS. 6(k) to 6(m), the torque limiting unit 32 limits the torque command values $\tau_m{}^*$ of respective rear shafts (second shaft 212 to fourth shaft 214) at the times t2, t3, and t4. Then, the torque limiting unit 32 outputs the torque limit values $\tau_{m\_2}{}^{**}$ to $\tau_{m\_4}{}^{**}$ of the second to fourth shafts.

As a result, it is possible to suppress the idling of the vehicle wheels 21 in the rear shafts (second shaft 212 to fourth shaft 214). Here, as illustrated in FIG. 6(d), it can be seen that a second-shaft rotation frequency Rf2 to a fourth-shaft rotation frequency Rf4 do not increase at the times t2, t3, and t4, and idling does not occur in the vehicle wheels 21.

In this case, the torque command calculation unit 11 functions as a first limiting unit that limits a first driving force (in this case, the torque command value $\tau_m{}^*$) for a first axle (in this case, the front shaft (first shaft 211)) which is the axle connected to the rotating electrical machine 4 that generates a driving force for driving the vehicle 20, in order to cause first vehicle wheels (in this case, the vehicle wheels 21 disposed on the front shaft (first shaft 211)) disposed on the first axle to be viscously mounted. In this case, the limited first driving force corresponds to the torque command value $\tau_m{}^*$ after limitation.

In addition, the torque limiting unit 32 functions as a second limiting unit that limits, at a location where the first driving force is limited, a second driving force (in this case, the torque command value $\tau_m{}^*$) for second axles (in this case, the rear shafts (second shaft 212 to fourth shaft 214)) which are axles located behind the first axle in the traveling direction of the vehicle 20, in order to cause second vehicle wheels (in this case, the vehicle wheels 21 disposed on the rear shafts (second shaft 212 to fourth shaft 214)) disposed on the second axles to be viscously mounted. In this case, the limited second driving force corresponds to the (limited) torque command value $\tau_m{}^{**}$.

The location where the first driving force is limited is a place where the first vehicle wheels have idled or slipped. Here, when the first vehicle wheels have idled or slipped, the torque command calculation unit 11 limits the first driving force, and the torque limiting unit 32 limits the second driving force at a location where the first vehicle wheels have idled or slipped. Accordingly, it is possible to suppress the idling or slip of the vehicle wheels 21 disposed on the rear shafts (second shaft 212 to fourth shaft 214).

Next, a configuration will be described in which a traveling position for limiting a torque in an appropriate travel section is calculated from the detection information of the front shaft (first shaft 211). Here, the traveling position calculation unit 30 calculates the traveling position of the rear shaft (second shaft 212 to fourth shaft 214) based on the front shaft (first shaft 211). Then, when the traveling position of the rear shaft (second shaft 212 to fourth shaft 214) reaches a location where idling slip occurs in the vehicle wheels 21 disposed on the front shaft (first shaft 211), the torque limiting unit 32 limits the driving force with respect to the rear shaft (second shaft 212 to fourth shaft 214).

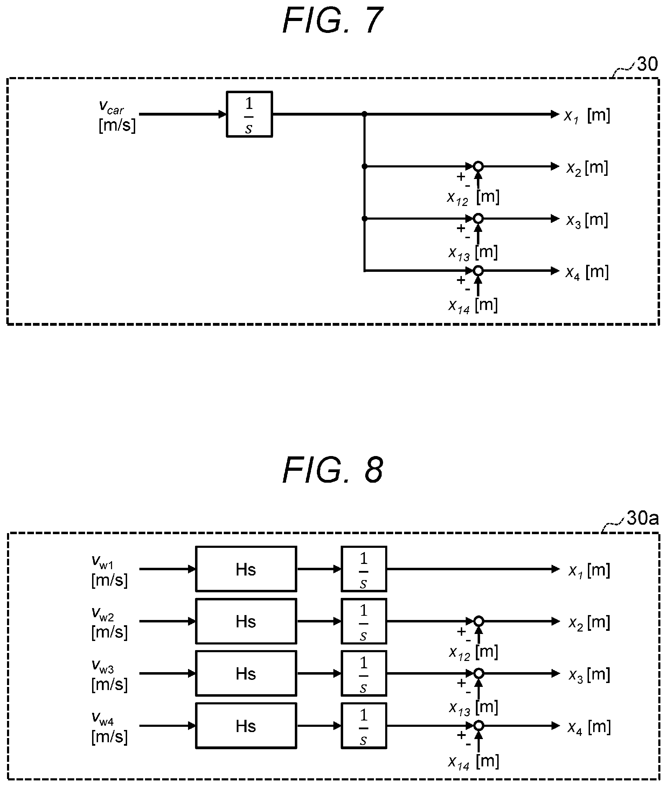

FIG. 7 is a diagram illustrating an example of the traveling position calculation unit 30.

The traveling position calculation unit 30 integrates (illustrated as "1/s" in the drawing) the vehicle speed $v_{car}$ to calculate relative traveling positions $x_2$ to $x_4$ of the rear shafts (second to fourth shafts) with respect to the front shaft (first shaft). As the vehicle speed information including the vehicle speed $v_{car}$, for example, a value received from the host control device 50 (see FIG. 1) of the control device 2 is used. Therefore, here, the traveling position calculation unit 30 obtains a traveling position from a traveling distance. In addition, the traveling position calculation unit 30 can also obtain the traveling position by the time until reaching this position. In any case, the torque limiting unit 32 can determine the place where the first vehicle wheels have idled or slipped, on the basis of the traveling position obtained on the basis of distances between the front shaft (first shaft) and the rear shafts (second to fourth shafts) (a distance $x_{12}$ between the first shaft and the second shaft, a distance $x_{13}$ between the first shaft and the third shaft, and a distance $x_{14}$ between the first shaft and the fourth shaft) and the speed of the vehicle 20 (vehicle speed $v_{car}$). In this case, it is possible to easily calculate the place where the first vehicle wheels have idled or slipped.

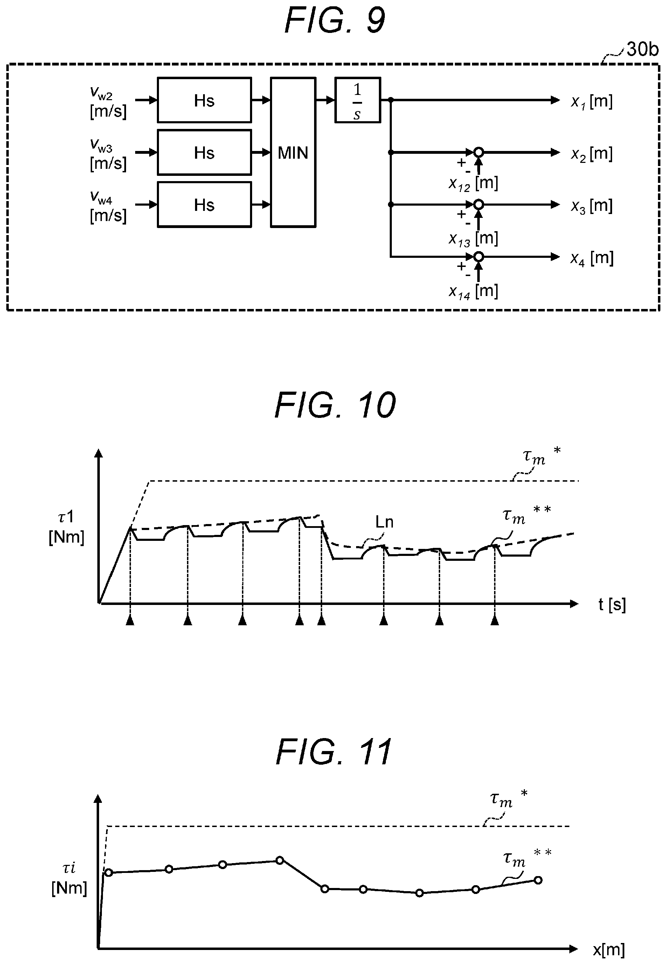

FIGS. 8 and 9 are diagrams illustrating modifications of the traveling position calculation unit 30.

FIG. 8 illustrates a traveling position calculation unit 30a as a modification of the traveling position calculation unit 30. The traveling position calculation unit 30a corrects (illustrated as "Hs" in the drawing) the influence of a vehicle wheel diameter difference on circumferential speeds $v_{w1}$ to $v_{w4}$ of the vehicle wheels 21 of the first to fourth shafts and then integrates (illustrated as "1/s" in the drawing) to obtain the relative traveling positions $x_2$ to $x_4$ of the rear shafts (second to fourth shafts) with respect to the front shaft (first shaft). In FIG. 8, the circumferential speeds of the vehicle wheels 21 of the first shaft to the fourth shaft are illustrated as a first-shaft circumferential speed $v_{w1}$, a second-shaft circumferential speed $v_{W2}$, a third-shaft circumferential speed $v_{W3}$, and a fourth-shaft circumferential speed $v_{w4}$, respectively. By correcting the vehicle wheel diameter difference, the traveling position can be obtained more accurately.

FIG. 9 illustrates a traveling position calculation unit 30b as a modification of the traveling position calculation unit 30. The traveling position calculation unit 30b corrects (illustrated as "Hs" in the drawing) the influence of the vehicle wheel diameter difference on the circumferential speed of the vehicle wheels 21 of each of the rear shafts (second to fourth shafts) excluding the front shaft (first shaft) that undergoes idling slip, and then obtains a minimum value thereof. Then, the minimum value is integrated (illustrated as "1/s" in the drawing) to calculate the relative traveling positions $x_2$ to $x_4$ of the rear shaft (second to fourth shafts) with respect to the front shaft (first shaft). In FIG. 9, the circumferential speeds of the vehicle wheels 21 of the second shaft to the fourth shaft are illustrated as the second-shaft circumferential speed $v_{W2}$, the third-shaft circumferential speed $v_{W3}$, and the fourth-shaft circumferential speed $v_{W4}$, respectively.

Note that in the above-described example, the traveling position is obtained by integrating the vehicle speed $v_{car}$. However, in a case where information corresponding to the traveling position can be directly received from the host control device 50 of the control device 2, this information may be used.

Next, a configuration will be described in which the motor torque (maximum adhesion force) that can be output at the traveling position is calculated from the detection information of the front shaft (first shaft). Here, first, the torque information calculation unit 31 calculates a history of torque information with respect to the traveling position at the time of idling slip detection on the front shaft (first shaft).

FIG. 10 is a diagram illustrating an example of a torque command value held by the torque information calculation unit 31.

In FIG. 10, a horizontal axis represents time t, and a vertical axis represents a torque $\tau 1$ on the front shaft (first shaft).

In the front shaft (first shaft), idling occurs when the torque command value exceeds the maximum adhesion force. In this case, the torque command value (after the operation by the re-adhesion control) $\tau_m{}^{**}$ indicated by a solid line is limited to an original torque command value (torque command value $\tau_m{}^*$) indicated by an upper dotted line. Then, for the torque command value, torque reduction by the re-adhesion control and a torque restoration operation (an operation of returning the torque command to the original torque command value) after completion of the re-adhesion are repeated to follow a limit line Ln of the adhesion indicated by a lower dotted line. In FIG. 10, a place denoted by A is a holding timing of the torque command value. Then, the torque at the time of occurrence of idling is held and treated as the torque information. At this time, in a case where the limit line of adhesion (maximum adhesion force) changes due to a change in the state of the road surface, as illustrated in the drawing, the magnitude of the torque command value at which idling occurs also changes accordingly. In this case, as illustrated in the drawing, the torque command value at the time of idling detection is the maximum adhesive torque for this traveling position. Then, the torque information calculation unit 31 generates a history of the torque information for the traveling position on the basis of the torque command value at the time of idling detection.

FIG. 11 is a diagram illustrating an example of a history of the generated torque information.

In FIG. 11, a horizontal axis represents the traveling position x, and a vertical axis represents torque information $\tau i$. Here, a white point indicates a place calculated as the history of the torque information by the torque information calculation unit 31. That is, this white point indicates a relationship between the traveling position where idling is detected and the torque command value at this traveling position.

The history of the torque information acquired by the method described in FIG. 10 is treated as, for example, table data for the traveling position. The history of the torque information only needs to indicate the relationship between the traveling position and the torque information, and may be treated as a function or the like. Hereinafter, the history of the torque information may be referred to as a "torque limit table". Then, a line connecting the white points is set as a torque limit value. That is, it can also be said that FIG. 11 is a diagram illustrating the torque limit value for the traveling position.

In addition, as described below, the torque limiting unit 32 uses the torque limit table 40 to determine the torque command value for the rear shaft (second to fourth shafts) to be equal to or less than the torque limit value.

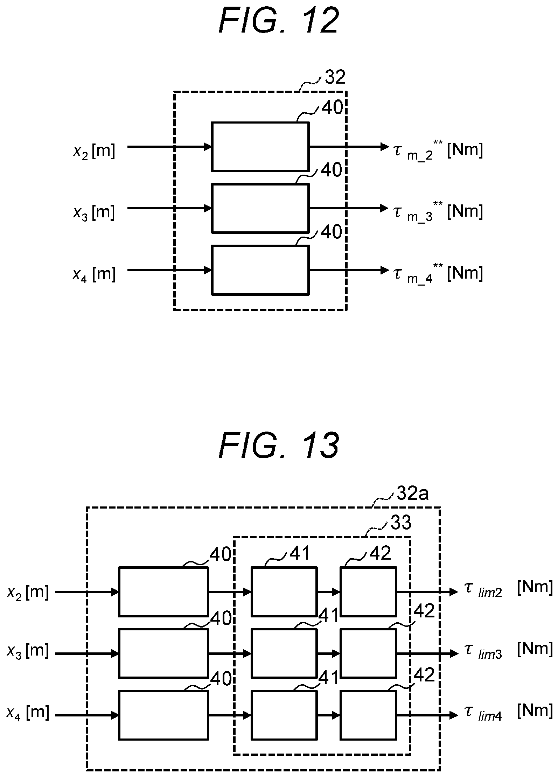

FIG. 12 is a diagram illustrating an example of a configuration of the torque limiting unit 32.

The torque limiting unit 32 limits the torque command value for the rear shaft (second to fourth shafts) to be equal to or less than the torque limit value determined by the torque limit table 40. Here, a case is described in which the torque limiting unit 32 limits the torque command value $\tau_m*$ according to the traveling position by using the torque limit table 40. Here, the traveling positions of the rear shafts (second to fourth shafts) are indicated by the second-shaft traveling position $x_2$, the third-shaft traveling position $x_3$, and the fourth-shaft traveling position $x_4$, respectively. Then, the torque command value $\tau_m*$ is limited to the second-shaft torque limit value $\tau_{m\_2}**$, the third-shaft torque limit value $\tau_{m\_3}**$, and the fourth-shaft torque limit value $\tau_{m\_4}**$ for respective rear shafts (second to fourth shafts). As described above, the torque limiting unit 32 limits the second driving force (in this case, the torque command value $\tau_m*$) on the basis of the limited first driving force (in this case, the torque command value $\tau_m*$ after limitation). At this time, the torque limiting unit 32 determines the limited second driving force (in this case, the (limited) torque command value $\tau_m**$) with the torque limit value obtained from the history of the limited first driving force (in this case, the torque command value $\tau_m*$ after limitation) as the upper limit. Here, the limited second driving force corresponds to the second-shaft torque limit value $\tau_{m\_2}**$, the third-shaft torque limit value $T_{m\_3}**$, and the fourth-shaft torque limit value $\tau_{m\_4}**$.

As described above, by using the traveling position obtained on the front shaft (first shaft) and the history of the torque information, it is possible to operate near the maximum adhesive torque while preventing idling of the rear shaft (second to fourth shafts).

FIG. 13 is a diagram illustrating a modification of the torque limiting unit 32.

FIG. 13 illustrates a torque limiting unit 32a as a modification of the torque limiting unit 32. The illustrated torque limiting unit 32a includes a torque limit value adjustment unit 33 as compared with the case of FIG. 12. The torque limit value adjustment unit 33 includes a smoothing filter 41 and adjustment gain 42.

The smoothing filter 41 smooths the limited first driving force (in this case, the torque command value $\tau_m*$ after limitation). Then, the torque limiting unit 32a further limits the second driving force. Then, the second-shaft torque limit value $\tau_{m\_2}**$, the third-shaft torque limit value $\tau_{m\_B3}**$, and the fourth-shaft torque limit value $\tau_{m\_4}**$ are obtained as the torque limit values.

As the smoothing filter 41, for example, a low-pass filter or the like is used. The smoothing filter 41 can suppress the vehicle body vibration caused by the sudden change in the torque limit value.

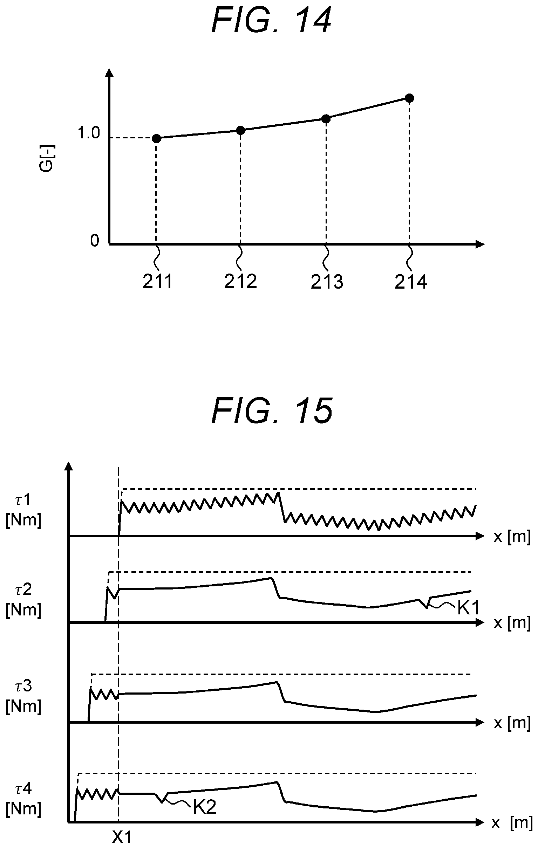

The adjustment gain 42 corrects a difference that may occur between the front shaft (first shaft) and the rear shaft (second to fourth shafts), such as the clearing of fallen leaves and moisture of the rail 22 due to the passage of the front shaft (first shaft) and a difference in axle weight that occurs between the front shaft (first shaft) and the rear shaft (second to fourth shafts). The adjustment gain 42 can make correction for each shaft by using the adjustment gain G of the setting value as illustrated in FIG. 14. FIG. 14 illustrates the value of the adjustment gain G of each of the rear shafts (second shaft 212 to fourth shaft 214) in a case where the front shaft (first shaft 211) is **1.0.** In the torque limiting unit 32, a value obtained by multiplying the limiting torque by the value of the adjustment gain 42 is set as the torque command value. As described above, the torque limiting unit 32a limits the second driving force after adjusting the limited first driving force (in this case, the torque command value $\tau_m*$ after limitation) with the adjustment gain determined for each rear shaft (second shaft 212 to fourth shaft 214). Then, the torque limiting unit 32a obtains a second-shaft torque limit value $\tau_{lim2}$, a third-shaft torque limit value $\tau_{lim3}$, and a fourth-shaft torque limit value $\tau_{lim4}$ as the torque limit values.

Accordingly, it is possible to operate each of the rear shafts (second to fourth shafts) near the maximum adhesive torque while preventing idling of the rear shafts.

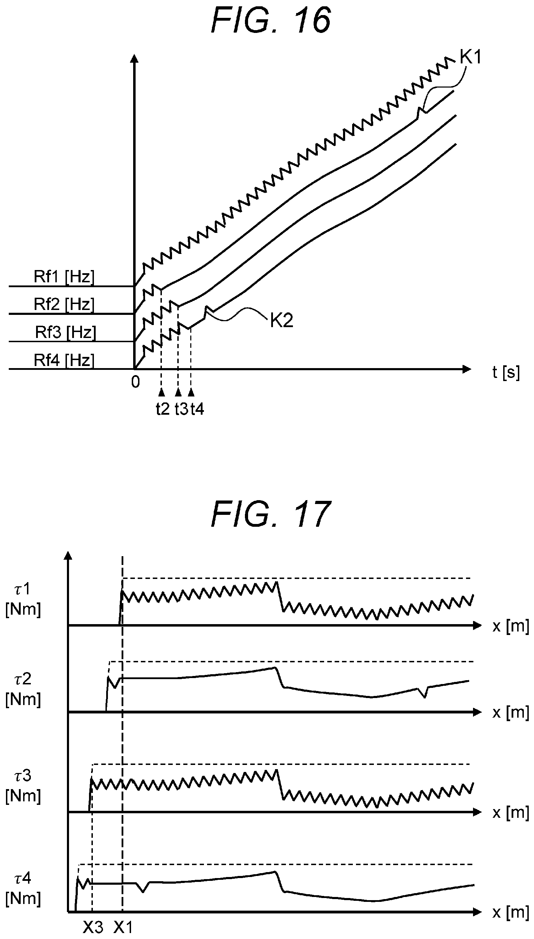

FIGS. 15 and 16 are diagrams illustrating an outline of operation waveforms in a case where the present embodiment is applied.

Among these, FIG. 15 is a diagram illustrating a torque waveform. In FIG. 15, a horizontal axis represents the traveling position x, and a vertical axis represents the first-shaft torque $\tau1$ to a fourth-shaft torque $\tau4$.

According to the torque waveform illustrated in FIG. 15, it can be seen that the torque (first-shaft torque $\tau1$) fluctuates up and down for the front shaft (first shaft) as idling and re-adhesion are repeated. On the other hand, the rear shafts (second to fourth shafts) operate near the maximum adhesion force while suppressing idling after the traveling position X1 where idling is detected on the front shaft (first shaft). As a result, the torque (second-shaft torque $\tau2$ to fourth-shaft torque $\tau4$) changes smoothly. However, the torque limitation of the rear shafts (second to fourth shafts) is not accurate, and there is a place where an error occurs. As illustrated in each of the second shaft and the fourth shaft in FIG. 15, idling may partially occur also in the rear shafts. FIG. 15 illustrates this at points K1 and K2. In this case, idling is detected by the same means as the front shaft (first shaft), and re-adhesion is performed by re-adhesion control.

In addition, FIG. 16 is a diagram illustrating the rotation frequency of the vehicle wheels 21. In FIG. 16, a horizontal axis represents time, and a vertical axis represents the rotation frequencies of the vehicle wheels 21 (first-shaft rotation frequency Rf1 to fourth-shaft rotation frequency Rf4).

According to FIG. 16, idling and re-adhesion are repeated for the front shaft (first shaft). As a result, the rotation frequency (first-shaft rotation frequency Rf1) of the vehicle wheels 21 rises and falls. On the other hand, on the rear shafts (second to fourth shafts), the rotation frequencies (second-shaft rotation frequency Rf2 to fourth-shaft rotation frequency Rf4) of the vehicle wheels 21 stably rise after the times t2, t3, and t4, which are times when the rear shafts (second to fourth shafts) reach the place (traveling position X1) where the front shaft (first shaft) idles. However, at the points K1 and K2, idling occurs in each of the second shaft and the fourth shaft.

In this case, in the rear shafts (second to fourth shafts), it seems that idling immediately after startup from stop (a period until the second shaft, the third shaft, and the fourth shaft reach the times t2, t3, and t4) cannot be suppressed. However, such a state actually occurs only immediately after the vehicle is unloaded from a depot or the like where the vehicle is first started. Then, in the subsequent traveling, for example, when starting after stopping at a station, the history of the torque information with respect to the traveling position recorded before stopping can be used, so that it does not become a significant problem in practical use.

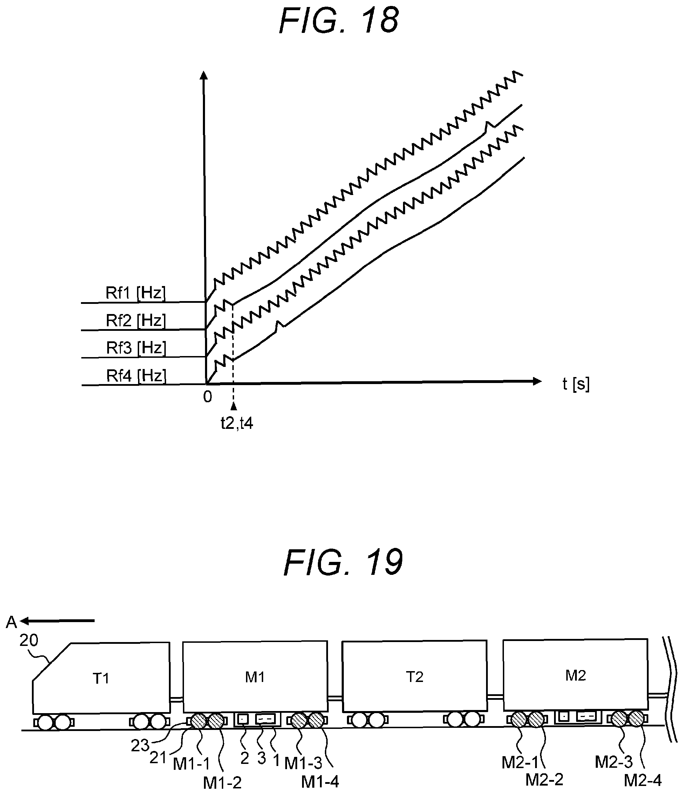

FIGS. 17 and 18 are diagrams illustrating an outline of operation waveforms in a case where a modification of the present embodiment is applied.

Among these, FIG. 17 is a diagram illustrating a torque waveform, similarly to FIG. 15. In addition, similarly to FIG. 16, FIG. 18 is a diagram illustrating the rotation frequencies (first-shaft rotation frequency Rf1 to fourth-shaft rotation frequency Rf4) of the vehicle wheels 21. In FIG. 17, a horizontal axis represents the traveling position x, and a vertical axis represents the first-shaft torque $\tau 1$ to the fourth-shaft torque $\tau 4$.

Here, sensor shafts (front shafts) for detecting the road state are defined as a first shaft and a third shaft. It can also be said that a plurality of first axles (first shaft, third shaft) is provided as the first axle. Then, the torques of a second shaft (rear shaft) is limited on the basis of the information of the first shaft (front shaft), and the torque of a fourth shaft (rear shaft) is limited on the basis of the information of the third shaft (front shaft).

According to the torque waveform illustrated in FIG. 17, it can be seen that idling and re-adhesion are repeated for the front shaft (first shaft), but for the rear shaft (second shaft), the operation is performed near the maximum adhesion force while idling is suppressed after the traveling position X1 where the idling is detected on the front shaft (first shaft). In addition, it can be seen that idling and re-adhesion are repeated for the front shafts (third shaft), but for the rear shafts (fourth shaft), the operation is performed near the maximum adhesion force while idling is suppressed after the traveling position X3 where the idling is detected on the front shaft (second shaft). Note that the time t2 is time when the rear shaft (second shaft) reaches a place (traveling position X1) where the front shaft (first shaft) idled, and the time t4 is time when the rear shaft (fourth shaft) reaches a place (traveling position X3) where the front shaft (third shaft) idles.

In this case, by increasing the number of shafts for detecting the road state of the rail 22, the fluctuation of the tangential force across the entire vehicle 20 increases, and the vehicle body vibration is likely to increase. However, a more accurate torque limit value can be obtained on the rear shaft (second shaft, fourth shaft).

FIG. 19 is a diagram illustrating an example of a case where the present embodiment is applied to the train formation of the vehicle 20.

In FIG. 19, idling slip of second to fourth shafts (M1-second shaft to M1-fourth shaft) of the M1 car is suppressed on the basis of the information of a first shaft (M1-first shaft) of a M1 car which is the M car. In a M2 car which is another M car, idling slip of second to fourth shafts (M2-second shaft to M2-fourth shaft) of the M2 car is suppressed on the basis of the information of a first shaft (M2-first shaft) of the M2 car.

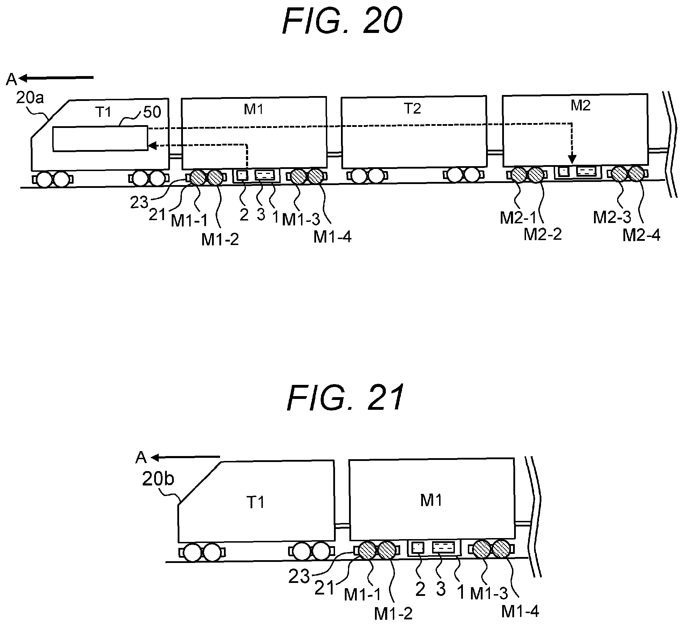

FIG. 20 is a diagram illustrating a first modification in a case where the present embodiment is applied to the train formation of the vehicle 20.

In FIG. 20, idling slip of the second to fourth shafts (M1-second shaft to M1-fourth shaft) of the M1 car and the first to fourth shafts (M2-first shaft to M2-fourth shaft) of the M2 car is suppressed on the basis of the information of the first shaft (M1-first shaft) of the M1 car which is the M car. Communication of the traveling position and the torque information between the control device 2 of the M1 car and the control device 2 of the M2 car is performed via, for example, the host control device 50. In FIG. 20, the idling position and torque information of the first shaft (M1-first shaft) of the M1 car are transmitted to the host control device 50. Then, the host control device 50 transmits the idling position and the torque information of the first shaft (M1-first shaft) of the M1 car to the first to fourth shafts (M2-first shaft to M2-fourth shaft) of the M2 car. It can also be said that the second axle (M2-first shaft to M2-fourth shaft) is an axle of another vehicle different from the vehicle on which the first axle (M1-first shaft) is disposed. In this case, the idling slip of the following vehicle 20 can be suppressed on the basis of the information of the preceding vehicle 20.

FIG. 21 is a diagram illustrating a second modification in a case where the present embodiment is applied to the train formation of the vehicle 20.

In FIG. 21, sensor shafts (front shaft) for detecting the road state are defined as the first shaft and the second shaft of the M1 car. Then, idling slip of the third and fourth shafts (M1-third shaft, M1-fourth shaft) of the M1 car is suppressed on the basis of the information of the first and second shafts (M1-first shaft, M1-second shaft) of the M1 car.

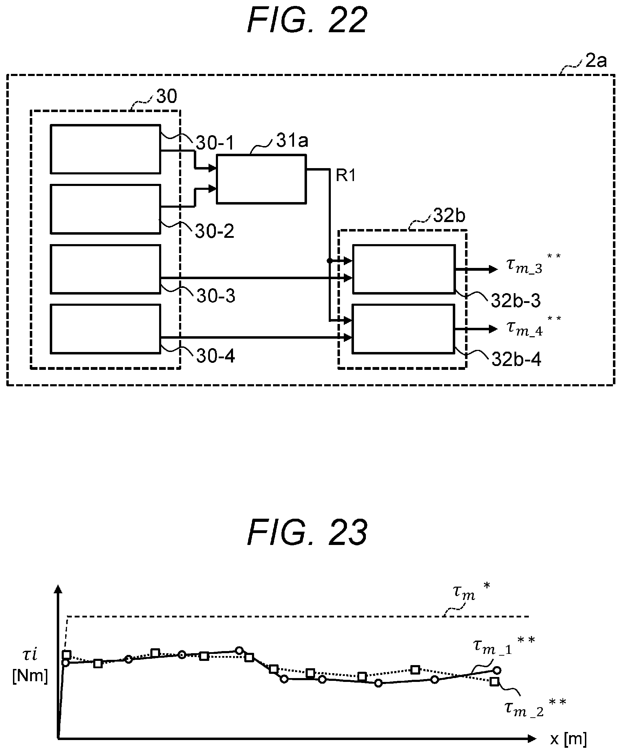

FIG. 22 is a diagram illustrating a configuration of a control device 2a as a modification of the control device 2 to which the configuration of FIG. 21 is applied.

The control device 2a includes the traveling position calculation unit 30, a torque information calculation unit 31a that is a modification of the torque information calculation unit 31, and a torque limiting unit 32b that is a modification of the torque limiting unit 32. The traveling position calculation unit 30 is provided for each of the first shaft to the fourth shaft. In FIG. 22, the traveling position calculation unit (first shaft) 30-1, the traveling position calculation unit (second shaft) 30-2, the traveling position calculation unit (third shafts) 30-3, and the traveling position calculation unit (fourth shaft) 30-4 are illustrated.

The torque information calculation unit 31a outputs the history R1 of the torque information at the time of idling slip of the first shaft and the second shaft located on the front side of the vehicle 20 in the traveling direction A. That is, the first shaft and the second shaft are sensor shafts.

The torque limiting unit 32b receives the history of the torque information of the first shaft and the second shaft and the traveling position calculation result of the third to fourth shafts calculated by the traveling position calculation unit 30, and outputs the torque limit values $\tau_{m\_3}{}^{**}$ and $\tau_{m\_4}{}^{**}$ of the third and fourth shafts located on the rear side of the vehicle 20 in the traveling direction A. Here, the torque limiting unit 32b is provided for each of the third and fourth shafts. In FIG. 22, a torque limiting torque limiting unit (third shaft) 32b-3 and a torque limiting unit (fourth shaft) 32b-4 are illustrated.

FIG. 23 is a diagram illustrating an example of a history of the torque information $\tau i$ in a case where the configuration of FIG. 21 is applied.

As illustrated, in a case where the sensor shafts (front shafts) are two of the first shaft and the second shaft, a torque limit value (first shaft) $\tau_{m\_1}{}^{**}$ is calculated as a torque limit value by the first shaft, and a torque limit value (second shaft) $\tau_{m\_2}{}^{**}$ is calculated as a torque limit value by the second shaft. Then, for example, the minimum values thereof or the average values thereof are set as the history of the torque information $\tau i$.

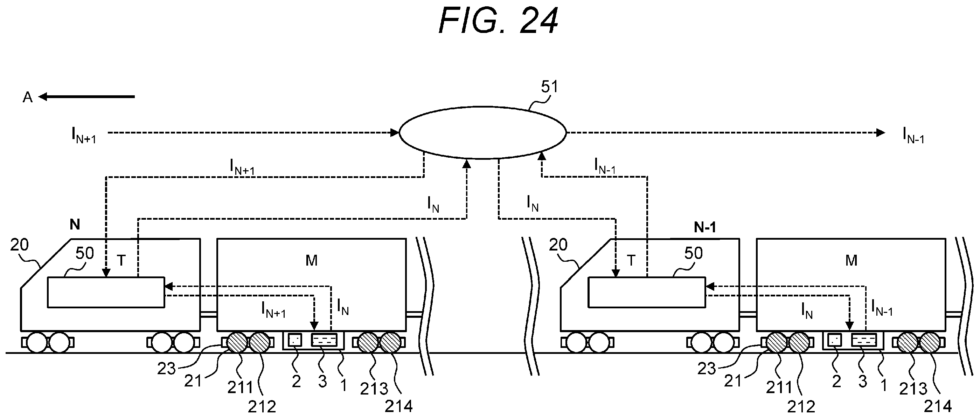

FIG. 24 is a diagram illustrating an example of a case where the present embodiment is applied between a plurality of train formations traveling on a railway.

FIG. 24 illustrates a case where the idling information (the traveling position and the history of the torque information ) is transmitted and received via a communication server 51 among a train formation N+1, a train formation N, and a train formation N-1 located in the front side and the rear side of the vehicle 20 in the traveling direction A. In this case, idling information $I_{N+1}$ of the train formation N+1 is sent to the train formation N via the communication server 51. In addition, the idling information $I_N$ of the train formation N is sent to the train formation N-1 via the communication server 51. Furthermore, the idling information $I_{N-1}$ of the train formation N-1 is sent to a further subsequent train formation via the communication server 51. Any method may be used for transmission and reception of the idling information as long as the idling information can be exchanged between the train formations. However, for example, a method can be used in which the host control device 50 performs data communication with the communication server 51 by using Wi-Fi.

In the train formation N, the idling information $I_{N+1}$ of the train formation N+1 (not illustrated) traveling on the front side is received. When the torque is operated at the same traveling position by using the received idling information $I_{N+1}$, the effect of preventing idling is also obtained at the head shaft of the M car of the train formation N. The idling information $I_N$ (the traveling position and the history of the torque information) obtained in the train formation N is transmitted to the subsequent train formation (train formation N-1), and the effect of preventing idling is similarly obtained also at the head shaft of the M car of the subsequent train formation (train formation N-1).

In a case where the idling information of the train formation traveling on the front side is used for control of the subsequent train formation, it is not necessarily required to apply the configuration to all the shafts of the subsequent train formation, and the configuration may be applied only to the front shaft (first shaft) of the M car in the traveling direction of the vehicle 20, and a configuration for preventing the idling in the train formation described with reference to FIGS. 1 to 23 may be applied to the rear shafts (second to fourth shafts).

In this case, it can also be said that, for example, when the vehicle wheels 21 disposed in the vehicle 20 of another train formation (for example, the train formation N+1) traveling in front of the train formation (for example, the train formation N) provided with an own device idle or slip, the torque limiting unit 32 of the train formation N limits, at this location, the first driving force (in this case, the torque command value $\tau_m{}^*$ before limitation) in order to cause the vehicle wheels 21 of the front shaft (first shaft) of the train formation (for example, the train formation N) provided with the own device to be viscously mounted. In this case, the occurrence of idling slip in the subsequent train formation can be suppressed on the basis of the information of the train formation traveling on the front side.

In addition, in a case where the idling information is transmitted and received between the train formations, a torque operation amount may be changed on the basis of a difference in occupancy rate (axle weight) of the relevant car between the front and rear train formations by using the configurations of FIGS. 13 and 14.

Note that since it is necessary to define a traveling position across the train formations, position information (mileage) held by the host control device 50 may be used.

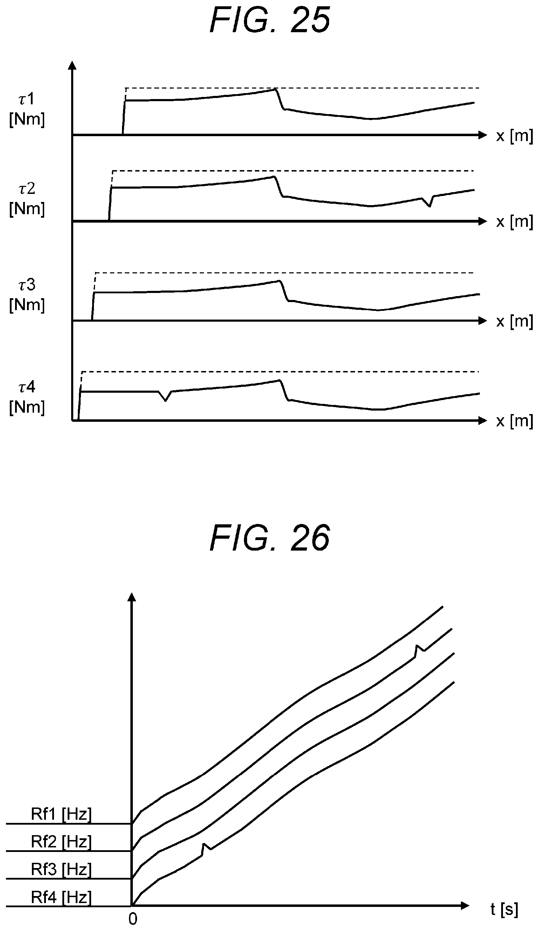

FIGS. 25 and 26 are diagrams illustrating an outline of operation waveforms in a case where the present embodiment is applied.

Among these, FIG. 25 is a diagram illustrating a torque waveform of the M car of the train formation N. In FIG. 25, a horizontal axis represents the traveling position x, and a vertical axis represents the first-shaft torque $\tau$1 to the fourth-shaft torque $\tau$4.

According to the torque waveform illustrated in FIG. 25, it can be seen that the front shaft (first shaft) operates near the maximum adhesion force while suppressing idling on the basis of the idling information of the train formation N+1 traveling on the front side. In addition, it can be seen that the rear shafts (second to fourth shafts) also operate near the maximum adhesion force while similarly suppressing idling on the basis of the history of the torque information of the front shaft (first shaft). In the case of FIG. 25, idling of not only the rear shafts (second to fourth shafts) but also the front shaft (first shaft) can be suppressed as compared with the case of FIG. 15.

In addition, FIG. 26 is a diagram illustrating the rotation frequencies of the vehicle wheels 21. In FIG. 26, a horizontal axis represents the time t, and a vertical axis represents the rotation frequencies (first-shaft rotation frequency Rf1 to fourth-shaft rotation frequency Rf4) of the vehicle wheels 21.

According to FIG. 26, it can be seen that the rotation frequencies of the vehicle wheels 21 stably rise on both the front shaft (first shaft) and the rear shafts (second to fourth shafts). In the case of FIG. 26, the rotation frequency of the vehicle wheels 21 of not only the rear shafts (second to fourth shafts) but also the front shaft (first shaft) can be stabilized as compared with the case of FIG. 16.

FIG. 27 is a diagram illustrating an example of a case where the synchronous machine 4a is used as the rotating electrical machine 4. In addition, FIG. 28 is a diagram illustrating an example of a case where the induction machine 4b is used as the rotating electrical machine 4.

Here, each shaft of the vehicle wheels 21 is connected to the synchronous machine 4a and the induction machine 4b via a gear 24.

In a case where the synchronous machine 4a in FIG. 24 is used, the configuration can be 1C1M. That is, as illustrated in FIG. 27, one voltage output device 3 is disposed for each synchronous machine 4a. In this case, since each shaft can be individually controlled, it is possible to cope with any configuration illustrated in FIGS. 19 to 21.

On the other hand, in a case where the induction machine 4b in FIG. 28 is used, the configuration is 1C2M. That is, as illustrated in FIG. 28, one voltage output device 3 is disposed for two induction machines 4b. Therefore, in this case where two induction machines 4b are driven in parallel, for example, the configuration illustrated in FIG. 21 is suitable.

As described above, in the torque operation in the re-adhesion control after the idling slip detection, it is difficult to achieve both the reduction of the vehicle body vibration and the improvement of the acceleration, and there is a trade-off relationship. In this regard, for driving, it is desirable to suppress the occurrence of idling slip itself and to always maintain the torque (maximum adhesion force) having the magnitude of the adhesive limit without steeply operating the torque. However, in the conventional method, it is difficult to suppress idling slip in a prompt response to a change in a road state (a gradient, a curve, an adhesion coefficient, or the like) that complicatedly changes depending on a travel section. Accordingly, for example, in a case where the power distribution pattern selection based on the number of times of occurrence of idling slip in the past becomes inappropriate for the current situation, there arises a problem that idling slip cannot be suppressed. In addition, the output of the rotating electrical machine 4 is excessively reduced, and there arises a problem that the acceleration of the vehicle 20 cannot be obtained. In this regard, when occurrence of idling slip is expected in various road states, it is desirable that the torque of each shaft is reduced by a necessary magnitude to prevent the idling slip.

In the present embodiment, the front shaft is a so-called sensor shaft for detecting a road state, and idling slip of the vehicle wheels 21 on the rear shafts is prevented. Note that in the form of FIG. 24, this is applied to the train formation traveling on the front side and is also applied to the subsequent train formation. In this case, the idling slip of the vehicle wheels 21 can be suppressed in accordance with various road states. In addition, it is possible to operate the rotating electrical machine 4 near the maximum adhesion force without causing the rotating electrical machine 4 to perform a steep torque operation, and it is possible to achieve both reduction in vehicle body vibration and improvement in acceleration.

As described above, if the torque of the rear shaft is limited at the traveling position on the basis of the traveling position and the torque information of the front shaft, the effects of the present embodiment can be obtained. Therefore, the combination of the front shaft used as a sensor and the rear shaft for preventing idling slip and the type of drive system of the rotating electrical machine 4 may be any combination.

In addition, the configuration of the traveling position calculation unit 30 is an example, and it is sufficient that the relative positional relationship of the rear shaft (second to fourth shafts) with respect to the front shaft (first shaft) can be defined, and not only the traveling position but also a time corresponding thereto or the like may be used.

In addition, in the present embodiment, a case has been described in which the shaft on the front side with respect to the traveling direction is the first shaft. However, in a case where the operation is performed with a reverse direction as the head in a backward movement operation or the like, the operation is performed in a configuration in which the shaft on the front side with respect to the traveling direction is the fourth shaft, and the torque of the rear shafts (first to third shafts) is limited on the basis of the information of the front shaft (fourth shaft).

[Second Embodiment]

Next, a second embodiment of the vehicle control system 100 will be described.

The second embodiment is different from the first embodiment in that an estimated value of the tangential force calculated by an observer is used as the history of the torque information calculated by the torque information calculation unit 31, and the other points are the same.

As the observer for estimating the tangential force, for example, the following generally known configuration is used. When the block diagram of FIG. 3 is organized for the tangential force torque $T_L$ [Nm] and converted into a motor torque, an estimated tangential force torque value $\tau_L{}^{\wedge}$ [Nm], which is the estimated value of the tangential force, is expressed by the following equation.

[Mathematical Formula 1]

$$\hat{\tau_L} = \frac{1}{1 + T_{LPF} \cdot s} (\tau_m^* - J_W^* \cdot \hat{\omega_m} \cdot s)$$

Here, $\tau_m{}^*$ is a torque command value, $J_W{}^{\wedge}$ is a rotor inertia of a drive wheel shaft, $\omega_m{}^{\wedge}$ is an estimated value of an angular frequency of a rotor, $T_{LPF}$ is a primary low-pass filter time constant, and s is a Laplace operator.

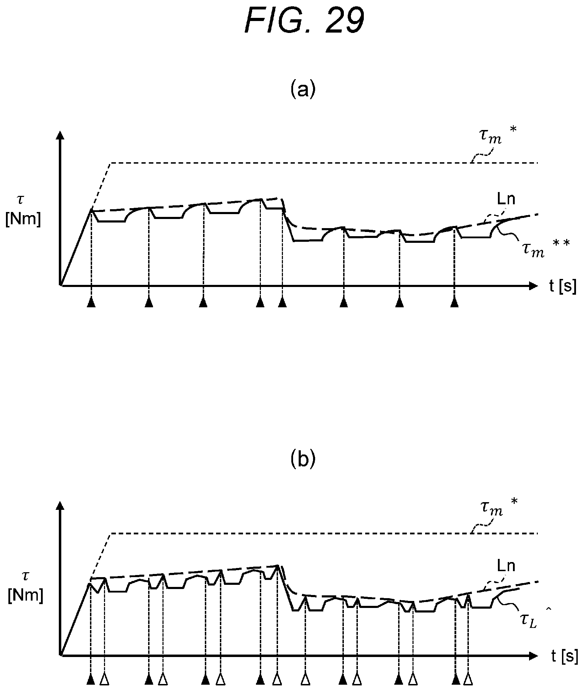

FIGS. 29(a) to 29(b) are diagrams for comparing the history of the torque information generated in the first embodiment with a history of torque information generated in the second embodiment.

Among these, FIG. 29(a) is the history of the torque information generated in the first embodiment, and FIG. 29(b) is the history of the torque information generated in the second embodiment.

In FIG. 29(a), as described with reference to FIG. 10, the torque information calculation unit 31 creates a history of torque information by using a torque command value. That is, the torque command value (after the operation by the re-adhesion control) $\tau_m{}^{**}$ indicated by a solid line is limited to the original torque command value (torque command value $\tau_m{}^*$) indicated by an upper dotted line. Then, for the torque command value, torque reduction by the re-adhesion control and a torque restoration operation (an operation of returning the torque command to the original torque command value) after completion of the re-adhesion are repeated to follow a limit line Ln of the adhesion indicated by a lower dotted line. In FIG. 29(a), a place denoted by ▲ is a holding timing of the torque command value. Then, the torque at the time of occurrence of idling is held and treated as the torque information. In this case, the limit line of adhesion can be grasped only when idling slip is detected.

On the other hand, in FIG. 29(b), the torque information calculation unit 31 uses an observer that estimates the tangential force as shown in the above Mathematical Formula 1. Accordingly, the maximum adhesive torque can be estimated not only at the time of detecting idling slip but also in the process of transitioning from the state of idling slip to the adhesion state. As a result, in the torque information calculation unit 31, the number of times of sampling for grasping the limit line of adhesion can be increased. Then, in the torque limiting unit 32, the torque limit value of the rear shaft is output by using the tangential force with respect to the vehicle wheels 21, the tangential force being estimated in the process of transitioning to the adhesion state after the vehicle wheels 21 disposed on the front shaft have idled or slipped. Accordingly, it is possible to more accurately estimate the maximum adhesion force. In FIG. 29(b), a place denoted by ▲ is a holding timing of the torque command value. In addition, a place denoted by △ is a recording timing at the time of transition from the idling state to the adhesion state. Then, the torque command value or the estimated tangential force value at the time of occurrence of idling and the estimated tangential force value at the time of transition from the idling state to the adhesion state are held and treated as the torque information.

Note that although FIG. 29(b) illustrates a case where only the observer that estimates the tangential force is used, the torque command value may be used together.

As described above, the drive device 1 of the rotating electrical machine 4 according to the second embodiment uses, as a function of the torque information calculation unit 31, the estimated value of the tangential force (estimated tangential force torque value $\tau_L{}^{\wedge}$) estimated by the observer that estimates the tangential force. Accordingly, it is possible to more accurately grasp the maximum adhesion force with respect to the traveling position. Further, reduction in vehicle body vibration and improvement in acceleration can be realized.

[Third Embodiment]

Next, a third embodiment of the vehicle control system 100 will be described.

The third embodiment is different from the first embodiment in that the repetition period of the re-adhesion control of the front shaft (first shaft) (a frequency of repetition of reducing and raising the torque) is made earlier than those of the rear shafts (second to fourth shafts), and the other points are the same.

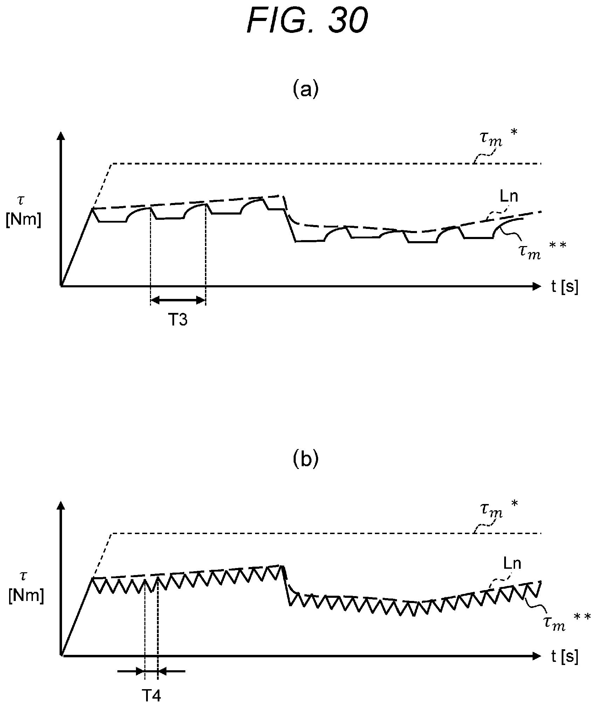

FIGS. 30(a) to 30(b) are diagrams for comparing the history of the torque information generated in the first embodiment with a history of torque information generated in the third embodiment.

FIG. 30(a) is the history of the torque information generated in the first embodiment, and corresponds to a case where the frequency of re-adhesion control is low. In this case, the sampling interval of the torque information is time T3, and the sampling of the torque information is rough. On the other hand, FIG. 30(b) is the history of the torque information generated in the third embodiment, and corresponds to a case where the frequency of re-adhesion control is high. In this case, the sampling interval of the torque information is time T4, and the sampling of the torque information is fine. That is, T3 > T4.

In the case of FIG. 30(b), as compared with the case of FIG. 30(a), the torque operation of the re-adhesion control in the torque command calculation unit 11 of the front shaft (first shaft) is made steeper than the rear shafts (second to fourth shafts), and the repetition period of the re-adhesion control is made earlier. This can also be said that the torque command calculation unit 11 increases the frequency of limiting the first driving force (in this case, the torque command value $\tau_m$* before limitation) more than the frequency of the torque limiting unit 32 limiting the second driving force (in this case, the torque command value $\tau_m$* before limitation).

In the case of FIG. 30(b), as compared with the case of FIG. 30(a), the number of times of sampling for grasping the limit line of adhesion in the torque information calculation unit 31 can be increased, and the maximum adhesion force can be estimated more accurately.

In addition, in the rear shafts (second to fourth shafts), the torque operation becomes gentle even in a situation where the estimation error of the torque limit value occurs and the idling occurs, such as the points K1 and K2 illustrated in FIGS. 15 and 16, and the occurrence of the vehicle body vibration can be suppressed.

As described above, the drive device 1 of the rotating electrical machine 4 according to the third embodiment makes the repetition period of the re-adhesion control of the front shaft (first shaft) earlier than that of the rear shafts (second to fourth shafts), thereby making it possible to more accurately grasp the maximum adhesion force with respect to the traveling position. Accordingly, it is possible to further reduce the vehicle body vibration and improve the acceleration.

<Description of vehicle control method>

Here, the process performed by the control device 2 can be regarded as a vehicle control method which includes limiting a first driving force for a first axle that is an axle connected to the rotating electrical machine 4 which generates a driving force for driving the vehicle 20, in order to cause the vehicle wheels 21 disposed on the first axle to be viscously mounted, and limiting, at a location where the first driving force is limited, a second driving force for a second axle that is an axle located on a rear side from the first axle in a traveling direction of the vehicle 20, in order to cause the vehicle wheels 21 disposed on the second axle to be viscously mounted.

Although the present embodiment has been described above, the technical scope of the present invention is not limited to the scope described in the above embodiment. It is apparent from the description of the claims that various modifications or improvements are added to the above embodiments within the technical scope of the present invention.

Reference Signs List

| | |
|---|---|
| 100 | vehicle control system |
| 1 | drive device |
| 2, 2a | control device |
| 3 | voltage output device |
| 4 | rotating electrical machine |
| 4a | synchronous machine |
| 4b | induction machine |
| 11 | torque command calculation unit |
| 20 | vehicle |
| 21 | vehicle wheel |
| 22 | rail |
| 30, 30a, 30b | traveling position calculation unit |
| 31 | torque information calculation unit |
| 32 | torque control unit |
| 50 | host control device |

N-1, N, N+1    train formation

**Claims**

1.  A vehicle control device comprising:

    a first limiting unit which limits a first driving force for a first axle that is an axle connected to a driving part which generates a driving force for driving a vehicle, in order to cause first vehicle wheels disposed on the first axle to be viscously mounted; and
    a second limiting unit which limits, at a location where the first driving force is limited, a second driving force for a second axle that is an axle located on a rear side from the first axle in a traveling direction of the vehicle, in order to cause second vehicle wheels disposed on the second axle to be viscously mounted.

2.  The vehicle control device according to claim 1, wherein the location where the first driving force is limited is a place where the first vehicle wheels have idled or slipped.

3.  The vehicle control device according to claim 2, wherein the second limiting unit determines the place based on a traveling position obtained on a basis of a distance between the first axle and the second axle and a speed of the vehicle.

4.  The vehicle control device according to claim 3, wherein the traveling position is obtained after correcting a vehicle wheel diameter difference of the second vehicle wheels.

5.  The vehicle control device according to any one of claims 1 to 4, wherein the second limiting unit limits the second driving force on a basis of the limited first driving force.

6.  The vehicle control device according to claim 5, wherein the second limiting unit determines the limited second driving force with a torque limit value obtained from a history of the limited first driving force as an upper limit.

7.  The vehicle control device according to claim 5 or 6, wherein the second limiting unit limits the second driving force after smoothing the limited first driving force.

8.  The vehicle control device according to any one of claims 5 to 7, wherein the second limiting unit limits the second driving force after adjusting the limited first driving force with an adjustment gain determined for each second axle.

9.  The vehicle control device according to any one of claims 5 to 8, wherein

    a plurality of first axles is provided as the first axle, and
    the second limiting unit limits the second driving force on a basis of the first driving force limited to each of the plurality of first axles.

10. The vehicle control device according to any one of claims 1 to 9, wherein the second axle is an axle of another vehicle different from a vehicle in which the first axle is disposed.

11. The vehicle control device according to any one of claims 1 to 10, wherein when vehicle wheels disposed in a vehicle of another train formation traveling in front of a train formation provided with an own device have idled or slipped, the first limiting unit limits, at a location where the vehicle wheels have idled or slipped, the first driving force in order to cause the first vehicle wheels of the train formation provided with the own device to be viscously mounted.

12. The vehicle control device according to any one of claims 1 to 11, wherein the second limiting unit limits the second driving force by using a tangential force with respect to the first vehicle wheels, the tangential force being estimated in a process of transition to an adhesion state after the first vehicle wheels have idled or slipped.

13. The vehicle control device according to any one of claims 1 to 12, wherein the first limiting unit increases a frequency of limiting the first driving force more than a frequency of the second limiting unit limiting the second driving force.

14. A vehicle control method comprising:

**EP 4 566 865 A1**

limiting a first driving force for a first axle that is an axle connected to a driving part which generates a driving force for driving a vehicle, in order to cause first vehicle wheels disposed on the first axle to be viscously mounted; and limiting, at a location where the first driving force is limited, a second driving force for a second axle that is an axle located on a rear side from the first axle in a traveling direction of the vehicle, in order to cause second vehicle wheels disposed on the second axle to be viscously mounted.

15. A vehicle control system comprising:

a driving part which generates a driving force for driving a vehicle;
vehicle wheels which cause the vehicle to travel by the driving force of the driving part; and
a control device which performs control to cause the vehicle wheels to be viscously mounted, wherein
the control device includes
a first limiting unit which limits a first driving force for a first axle that is an axle connected to the driving part, in order to cause first vehicle wheels disposed on the first axle to be viscously mounted, and
a second limiting unit which limits, at a location where the first driving force is limited, a second driving force for a second axle that is an axle located on a rear side from the first axle in a traveling direction of the vehicle, in order to cause second vehicle wheels disposed on the second axle to be viscously mounted.

17

# FIG. 1

(a)

(b)

# FIG. 2

*FIG. 3*

## FIG. 4

## FIG. 5

# FIG. 6

(a)

A

20

22

T

M

23
21

211
212

2 3 1

213
214

t1 t2    t3 t4

(b)  $v_{car}$ [km/h]                                                                    t [s]

(c)  Rf1 [Hz]                                                                           t [s]

(d)  Rf2 TO Rf4 [Hz]                                                                    t[s]

(e)  x[m]

211
212
213
214

x1
0                                                                                      t [s]

(f)  Nk1                                                                                t [s]

(g)  Nk2                                                                                t [s]

(h)  Nk3                                                                                t [s]

(i)  Nk4                                                                                t [s]

(j)  $\tau_{m\_1}{}^{**}$ [Nm]                                                          t [s]

(k)  $\tau_{m\_2}{}^{**}$ [Nm]                                                          t [s]

(l)  $\tau_{m\_3}{}^{**}$ [Nm]                                                          t [s]

(m)  $\tau_{m\_4}{}^{**}$ [Nm]                                                          t [s]

# FIG. 7

# FIG. 8

## FIG. 9

## FIG. 10

## FIG. 11

# FIG. 12

$x_2$ [m] → [40] → $\tau_{m\_2}^{**}$ [Nm]

$x_3$ [m] → [40] → $\tau_{m\_3}^{**}$ [Nm]

$x_4$ [m] → [40] → $\tau_{m\_4}^{**}$ [Nm]

32

# FIG. 13

32a

33

$x_2$ [m] → [40] → [41] → [42] → $\tau_{lim2}$ [Nm]

$x_3$ [m] → [40] → [41] → [42] → $\tau_{lim3}$ [Nm]

$x_4$ [m] → [40] → [41] → [42] → $\tau_{lim4}$ [Nm]

## FIG. 14

## FIG. 15

## FIG. 16

## FIG. 17

## FIG. 18

Rf1 [Hz]

Rf2 [Hz]

Rf3 [Hz]

Rf4 [Hz]

0

t2,t4

t [s]

## FIG. 19

A

20

T1

M1

T2

M2

23

21

M1-1

M1-2

2 3 1

M1-3

M1-4

M2-1

M2-2

M2-3

M2-4

# FIG. 20

# FIG. 21

# FIG. 22

# FIG. 23

FIG. 24

# FIG. 25

# FIG. 26

## FIG. 27

## FIG. 28

# FIG. 29

(a)

(b)

# FIG. 30

(a)

(b)

## INTERNATIONAL SEARCH REPORT

| International application No. |
| --- |
| **PCT/JP2023/025921** |

| | |
| --- | --- |
| **A.** | **CLASSIFICATION OF SUBJECT MATTER** |
| | ***B60L 15/20***(2006.01)i; ***B60L 9/18***(2006.01)i<br>FI:    B60L15/20 Y; B60L9/18 S |

According to International Patent Classification (IPC) or to both national classification and IPC

| | |
| --- | --- |
| **B.** | **FIELDS SEARCHED** |

Minimum documentation searched (classification system followed by classification symbols)

    B60L15/20; B60L9/18

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X<br><br>Y | JP 2003-348706 A (HITACHI LTD) 05 December 2003 (2003-12-05)<br>    paragraphs [0006]-[0025], fig. 1-19 | 1-9, 12-15<br><br>10-13 |
| Y | JP 2011-4549 A (HITACHI LTD) 06 January 2011 (2011-01-06)<br>    paragraphs [0055]-[0061], fig. 9 | 10-13 |
| A | JP 2010-28982 A (RAILWAY TECHNICAL RES INST) 04 February 2010 (2010-02-04)<br>    entire text, all drawings | 1-15 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 September 2023** | **26 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/025921**

| Patent document cited in search report | | | Publication date (day/month/year) | Patent family member(s) | Publication date (day/month/year) |
|---|---|---|---|---|---|
| JP | 2003-348706 | A | 05 December 2003 | EP 832779 A2 column 3, line 34 to column 11, line 37, fig. 1-8 CN 1186743 A KR 10-1998-0024913 A | |
| JP | 2011-4549 | A | 06 January 2011 | (Family: none) | |
| JP | 2010-28982 | A | 04 February 2010 | (Family: none) | |

Form PCT/ISA/210 (patent family annex) (January 2015)

**EP 4 566 865 A1**

**Patent documents cited in the description**

- JP 2006304464 A

- JP 2009290954 A